# EUROPEAN PATENT APPLICATION

(11) **EP 4 488 054 A1**
(43) Date of publication of application: **08.01.2025**
(21) Application number: 24184877.9
(22) Date of filing: 27.06.2024
(51) Int. Cl.: B32B 5/02, B32B 5/26, B32B 15/14, B32B 15/18, B32B 15/20, B32B 25/10, B32B 25/20, B32B 27/12, B32B 27/28, B32B 27/30, B32B 27/32, B32B 27/34, B32B 27/36, B32B 27/40

(54) **SANDWICH MECHANICAL PART WITH A UNSATURATED FIBER CORE LAYER**

(30) Priority: 01.07.2023 DE 102023117423
(71) Applicant: 4A Manufacturing GmbH, 8772 Traboch (AT)
(72) Inventor: Hergan, Patrick Matthias, 8700 Leoben (AT); Pichler, Michael, 8723 Kobenz (AT); Hafellner, Reinhard, 8724 Spielberg (AT)
(74) Representative: Dilg, Haeusler, Schindelmann Patentanwaltsgesellschaft mbH

(57) **Abstract**

The present invention describes a sandwich mechanical part, comprising a first skin layer (101), a second skin layer (102), and an unsaturated fiber core layer (103) interposed between the first skin layer (101) and the second skin layer (102) to form a stack such that the first skin layer (101), wherein the unsaturated fiber core layer (103) and the second skin layer (102) are stacked above each other along a stacking direction (104). The unsaturated fiber core layer (103) comprises fibers (105), which are at least partially contact each other in a direct contact section (108) for transferring shear forces between the first skin layer (101) and the second skin layer (102).

## Description

### Field of invention

The present invention describes a sandwich mechanical part with a unsaturated fiber core layer comprising fibers. Furthermore, the present invention relates to a method for manufacturing the sandwich mechanical part.

### Art Background

For some industrial applications, thin and lightweight mechanical parts are necessary, which may be used in acoustic applications, container applications or housing structures. For example, in speakers for portable devices, thin elements which can be used as a diaphragm for loudspeakers are necessary in order to reduce the overall size of the loudspeaker.

Furthermore, thin, lightweight and mechanically robust parts are necessary to create lightweight components in many applications, such as in automotive construction, in aerospace, in sporting goods or for housing parts of devices. For example, in vehicles (e.g. backwalls or battery housings), luggage compartments or passenger compartments of rail vehicles or aircraft, and device housings.

Additionally, thin and lightweight mechanical parts with reduced shielding properties are necessary for antenna applications, such as radomes.

For these kinds of mechanical parts, thin sandwich structures are appropriate solutions, wherein a foam core is interposed between robust skin layers, e.g. metals, fiber reinforced plastics or plastic sheets and foils.

However, there is a need to provide more robust and thinner sandwich structures in comparison to sandwich structures e.g. with foam cores.

### Summary of the Invention

It is an object of the present invention to provide a mechanical part which are robust and thin and have less weight.

This object is solved by a sandwich mechanical part and a method of manufacturing a sandwich mechanical part according to the subject matter of the independent claims.

According to a first aspect a sandwich mechanical part is described comprising a first skin layer, a second skin layer, and an unsaturated fiber core layer interposed between the first skin layer and the second skin layer to form a stack such that the first skin layer, the unsaturated fiber core layer and the second skin layer are stacked above each other along a stacking direction. The unsaturated fiber core layer comprises fibers, wherein the unsaturated fibers at least partially contact each other in a direct contact section for transferring shear forces between the first skin layer and the second skin layer.

According to a further aspect, a method of manufacturing a sandwich mechanical part is described. According to the method, it is provided a first skin layer, a second skin layer and an unsaturated fiber core layer interposed between the first skin layer and the second skin layer to form a stack such that the first skin layer, the unsaturated fiber core layer and the second skin layer are stacked above each other along a stacking direction, wherein the unsaturated fiber core layer comprises unsaturated fibers, wherein the unsaturated fibers at least partially contact each other in a direct contact section for transferring shear forces between the first skin layer and the second skin layer.

Hence, by the present invention, the stack is formed by the two mechanically robust (e.g. metallic or polymer film material) skin layers and the lightweight unsaturated fiber core layer with the unsaturated fiber material therebetween. Such a sandwich layer sequence is both mechanically stable and lightweight, as well as suitable for mass production. Furthermore, the stack may have a flat design (two-dimensional) extending within a plane, or may have a three-dimensional design, like cone, dome, dish, or any other functional geometry. Thus, there is almost no limitation of re-forming the mechanical part into a structural member of any desired steric configuration. Furthermore, the sandwich construction may provide a high resonance frequency of the material and low weight. The unsaturated fibers contribute to the lightweight characteristics of the sandwich mechanical part and may at the same time also provide a contribution to the mechanical stability and damping.

In the context of this application, the term "skin layer" may particularly denote a layer or sheet covering the unsaturated fiber core layer to increase the bending stiffness properties, but not necessarily forming a surface layer.

In the context of this application, the term "unsaturated fiber core layer" may particularly denote an embedded layer having a central position within the layer sequence. The unsaturated fiber core layer may be selected with a lower density than the surrounding skin layers. The sandwich mechanical part may have a plate-like design and may extend within a plane. The sandwich mechanical part may also have a three-dimensional design having e.g. a curved extension. Thus, the unsaturated fiber core layer will not be a surface layer (with exception of the lateral edge of the layer stack at which the core layer may extend up to a surface) but will be always covered on both of its main surfaces by a skin layer. Some fibers in the unsaturated fiber core layer are at least partially in direct contact with the skin layers without any additional layer in between.

In the context of this application, the fibers in the unsaturated fiber core layer may be partially bonded together by mechanical, heat or solvent treatment but without additional adhesive material. The fibers in the unsaturated fiber core layer may form in an exemplary embodiment fabrics, which are neither woven nor knitted. The fibers in the unsaturated fiber core layer may be made from orientated or randomly oriented fibers pressed into a thin layer form. Within the thin layer, the fibers are connected in a way that they are rigidly connected by adhesion between surfaces of the fibers in the unsaturated fiber core layer on the contact sections or may contact each other at least section wise for generating a frictional contact between each other.

The fibers in the unsaturated fiber core layer according to the present invention define fibers that are arranged with respect to each other without being embedded in a fluid matrix, e.g. a resin matrix. "Unsaturated fiber layer" defines that between the fibers, gas filled spaces exist. Hence, the shear force transmitting characteristics of the fibers in the unsaturated fiber core layer is generated by contact sections of the fibers, at which by frictional contact or bonding contact forces, e.g. shear forces or boding force, may be transferred. Furthermore, the fibers in the unsaturated fiber core layer according to the present invention transfer along the stacking direction a force, i.e. the bonding force, via bonding sections formed between a fiber section and one of the skin layers or between sections of fibers in the unsaturated fiber core layer, and transfer additionally shear forces acting specifically orthogonal to the stacking direction by frictional forces or by bonding forces between contact sections of adjacent fibers in the unsaturated fiber core layer, i.e. by entangling fibers together or by bonding/adhering the fibers in the unsaturated fiber core layer together at contact sections of the fibers.

Hence, by the approach of the present invention, a lightweight sandwich part may be provided having a good bending stiffness and lower weight.

According to a further exemplary embodiment, at least some of the unsaturated fibers in the unsaturated fiber core layer are at least partially directly bonded at bonding sections to at least one of the first skin layer and the second skin layer such that a force along the stacking direction between the first skin layer, the second skin layer and the unsaturated fiber core layer is transferable via the bonding sections.

According to a further exemplary embodiment at least some of the fibers in the unsaturated fiber core layer are at least partially directly bonded at bonding sections to at least one of the first skin layer and the second skin layer such that a force along the stacking direction between the first skin layer, the second skin layer and the unsaturated fiber core layer is transferable via the bonding sections. Some of the fibers are bonded to the respective first or second skin layer directly, which means that no adhesive layer or adhesive promoting material is between the respective unsaturated fibers and the first or second skin layer. Specifically, the bonding section is formed by thermal treatment, wherein the fiber in the unsaturated fiber core layer and the skin layers at least partially melt such that an adhesive bonding connection can be generated.

However, along a length of a respective fiber in the unsaturated fiber core layer, one or a plurality of spaced apart bonding sections may be generated between the respective first or second skin layer. This means, that not the complete length of a fiber must provide a bonding with a respective skin layer, so that a bonding may be provided only section wise along the length of a fiber. However, it may also be possible, that one or a plurality of unsaturated fibers may completely contact along its length the respective first or second skin layer so that along a full length of the fiber a bonding section may be formed with the respective first and second skin layer.

Furthermore, in a further exemplary embodiment, some fibers in the unsaturated fiber core layer may contact the first skin layer with the first bonding section and some fibers in the unsaturated fiber core layer may contact the second skin layer with the second bonding section. Hence, a force acting with a direction component along or perpendicular to the stacking direction may be transferred from the first skin layer to the second skin layer by the respective fibers. Additionally, a first fiber in the unsaturated fiber core layer may form the first bonding section with the first skin layer and a second fiber in the unsaturated fiber core layer may form the second bonding section with the second skin layer. The first fiber and the second fiber may contact each other and form a contact section at which the force (e.g. bonding force and shear force) may be transferred. At the contact section, the force may be transferred by a direct bonding connection (e.g. a melting joint). It may also be possible that one fiber may form a bonding section with the first skin layer and a further bonding section with the second skin layer. Furthermore, shear forces or also a bending force may be transferred by a frictional contact between the unsaturated fibers.

By the approach of the present invention, the mechanical part comprises a thinunsaturated fiber core layer which is directly bonded and fixed to the skin layers. Conventional sandwich structures are formed by core layer thickness of more than 100 µm. The present invention achieves the advantages of sandwich structures (robustness, high bending stiffness, lightweight, high damping and high resonance frequency) at thicknesses less than 90 µm.

According to a further exemplary embodiment, at least a part of adjacent fibers in the unsaturated fiber core layer form the direct contact section between each other in such a manner, that shear forces generated by tensile and compressive forces and due to bending of the whole sandwich in at least one of the first skin layer and the second skin layer are transferable for increasing the bending stiffness of the sandwich mechanical part. At the contact section, a direct bonding or a frictional contact between the first fiber and the second fiber in the unsaturated fiber core layer is generated such that the force, e.g. shear force, is transferable. In the respective embodiments, a plurality of fibers in the unsaturated fiber core layer may have respective contact sections, at which the bonding of the fibers is generated or frictional contact is generated such that the force may be transferred via a plurality of fibers in the unsaturated fiber core layer bonded with respect to each other at respective contact sections. The bonding of the fibers at the contact sections may also be formed by a thermal treatment, wherein the fibers are at least partially melted at the contact sections and form the direct bonding connection (e.g. a melting joint), however without any additional adhesive promoting material. For example, the fibers may be thermoset fibers or bestage thermoset fibers, which may be adhered together upon curing.

According to a further exemplary embodiment, between the fibers spaces of a gaseous medium is formed, wherein in the spaces between the unsaturated fibers gas, in particular air, is provided. Hence, the fibers in the unsaturated fiber core layer are arranged in such a way that spaces filled with gas, in particular air, between the fibers are provided. The unsaturated fiber core layer may include only fibers, which form at least one fiber layer. The fibers may contact each other at a plurality of contact section and may form a frictional connection and/or a bonding connection for forming e.g. non woven material, such as a fleece or fibrous web material. Between the fibers in the unsaturated fiber core layer spaces filled with gas are formed. Typically, the gas is air filled inside the spaces. However, it may also be possible to fill a specific gas, such as inert gas, within the spaces.

For example, adhesion is achieved by pressing the fibers into a surface layer under heat. The unsaturated fiber core layer has air (gas) pockets which decrease the overall weight. The fibers are interconnected by melting or curing at specific contact sections and transfer the bonding and/or shear forces, while the pockets decrease the weight of the core layer.

According to a further exemplary embodiment, the spaces between the fibers in the unsaturated fiber core layer are free of additional adhesive promoting material, in particular a liquid or solid matrix material. Specifically, the space between the fibers is adhesive free but the fibers may be coated with an adhesive material. Hence, the above described embodiment is outlined, wherein the transferring the shear forces and/or the force is exclusively provided by the fibers and the respective contact sections and bonding sections instead of rigid matrix material, such as resin.

According to a further exemplary embodiment, at least some of the unsaturated fibers in the core layer form a non woven material. The non woven material is made of fibers of the unsaturated fiber core layer, wherein at least some of the fibers are at least partially directly bonded at bonding sections to at least one of the first skin layer and the second skin layer such that a force (bonding force and/or shear force) along the stacking direction between the first skin layer, the second skin layer and the unsaturated fiber core layer is transferable via the bonding sections. Shear forces can be transferred between the interfaces of the layers and the layers themselves.

In the context of this application, the term "non woven core layer" defines a layer of fibers in the unsaturated fiber core layer being a fleece or fibrous web material. A non woven fabric according to the present invention is a fabric-like material made from staple fibre (short) and/or long unsaturated fibers (continuous long). As described in further detail below, the fibers may be partially bonded together by mechanical, heat or solvent treatment but without additional adhesive material. The non woven material is made of fibers, which are neither woven nor knitted. The non woven fiber of the unsaturated fiber core layer may be made from randomly oriented fibers pressed into a thin layer form. Within the thin layer, the fibers are connected in a way that they are rigidly connected by adhesion between surfaces of the fibers on the contact sections between each other.

According to a further exemplary embodiment, (all or at least 80% or more of) the fibers in the unsaturated fiber core layer are arranged within one common layer. Along the stacking direction, only one layer of fibers may exist. In other words, all or at least 80% of the fibers in the unsaturated fiber core layer are not arranged above each other and are arranged adjacent to each other, i.e. orthogonal to the stacking direction.

Regarding the above-mentioned environment, in a further exemplary embodiment, (all or at least 80% or more of) the unsaturated fibers in the common layer are oriented with respect to each other in a common direction.

According to a further exemplary embodiment, wherein the fibers of the non woven material are arranged randomly orientated with respect to each other. Specifically, the fibers of the non-woven material are randomly orientated with respect to a fibre direction parallel to the stacking direction and orthogonal to the stacking direction. Specifically, the respective fibers may comprise a randomly orientated extension along its length such that a part of the fiber may be orientated more along the stacking direction and another part of the fiber may be orientated more orthogonal to the stacking direction. Hence, a kind of fibrous web material is formed in the unsaturated fiber core layer being for example able to transfer shear forces by a plurality of frictional contacts and or bonding connections between adjacent fibers.

According to a further exemplary embodiment, adjacent fibers in the unsaturated fiber core layer are at least partially in frictional contact with respect to each other for transferring a shear force being orientated orthogonal to the stacking direction between each other. As described above, the fibers may form a plurality of contact sections forming a frictional contact between the adjacent fibers. Hence, a kind of fibrous web material is formed being for example able to transfer shear forces by a plurality of frictional or adhered contacts between adjacent fibers.

According to a further exemplary embodiment, the fibers are made of thermoplastic fibers, in particular polyethylene terephthalates fibers, polysulfone fibers, Polyethylene naphthalate (PEN) fibers, Polyethylene (PE) fibers and/or Polyamide (PA) fibers. Thermoplastic fibers becomes underinflated of heat pliable or moldable at a certain elevated temperature and solidifies upon cooling. Specifically, by applying heat, a bond connection between the skin layer or between adjacent fibers at contact sections may be formed and upon cooling, the rigid connection may be formed for transferring the force. The fibers may also have a core, i.e. a partially cured thermoset core, which is coated or covered with a thermoplastic material. It may also be possible to use a glass core which is covered by (adhesive) thermoset coating.

According to a further exemplary embodiment, the thickness of the unsaturated fiber core layer is below 10 times the average diameter of the fibers of the unsaturated fiber core layer material. Specifically, the unsaturated fiber core layer comprises maximal 10 layers of fibers above each other. The fibers in a layer may also extend into above and below arranged layer. In other words, by the present invention it has found out, that a thin unsaturated fiber core layer, specifically a unsaturated fiber core layer below 10 times the diameter of the used fibers is rigid and stiff enough for transferring force and especially the shear force orthogonal to the stacking direction.

According to a further exemplary embodiment the thickness of the unsaturated fiber core layer is below 300 µm, below 200 µm, 90 µm, below 70 µm, below 40 µm or below 20 µm. Hence, the overall thickness of the mechanical part may be reduced, so that tiny and small parts, for example for acoustic micro-speakers, can be formed.

According to a further exemplary embodiment, the first skin layer and/or the second skin layer have a thickness below 100 µm, in particular below 50 µm, below 20 µm, below 14 µm, below 8 µm or below 5 µm. For example, the first skin layer and/or the second skin layer may have a thickness between 50 µm and 1 µm. For example, by having a thickness for the skin layers below 6 µm and by having a thickness of the unsaturated fiber core layer below 30 µm, mechanical parts thinner than 42 µm can be achieved by the present invention.

According to a further exemplary embodiment, the unsaturated fiber core layer has the same or a lower average density than each of the first skin layer and the second skin layer. Hence, generally the unsaturated fiber core layer is thicker than the skin layers. However, due to the lower average density of the unsaturated fiber core layer, a light weight sandwich structure may be formed. A surface average density of the unsaturated fiber core layer may be up to 100 g/m2.

According to a further exemplary embodiment the unsaturated fiber core layer has an average density between 30 and 800 kg/m3, in particular between 60 and 400 kg/m3 or between 30 and 800 kg/m3, in particular between 60 and 400 kg/m3 or 600 kg/m3 and 600 kg/m3.

According to a further exemplary embodiment, at least one of the skin layers are made of metals, in particular of one of the group consisting of steel alloys, aluminum alloys, magnesium alloys, copper, nickel alloys, titanium and beryllium.

According to a further exemplary embodiment, at least one of the skin layers are made of carbon-based materials, in particular of one of the group consisting of carbon fiber reinforced polymers, graphene, graphite-oxide and graphite-oxide paper.

According to a further exemplary embodiment, at least one of the skin layers are coated with diamond like carbon (DLC) coating.

According to a further exemplary embodiment, at least one of the skin layers are made of non-carbon based fiber reinforced skins, in particular of one of the group consisting of glass fiber reinforced polymer, Aramid reinforced plastics, Zylon reinforced plastics, polyethylene (PE) fiber reinforced plastics and natural fiber reinforced plastics.

According to a further exemplary embodiment at least one of the skin layers are made of thermoplastic foils and/or thermoset foils, wherein the thermoplastic foils may be selected from one of the group consisting of PET, Polyethylene naphthalate (PEN), Polyether ether ketone (PEEK), Polyetherimide (PEI), Polysulfone (PES), Polyethersulfone (PESU), Thermoplastic polyurethane (TPU), Thermoplastic elastomers (TPE), Liquid-crystal polymer (LCPs), Aramid, Polypropylene (PP), Polyethylene (PE), Poly(methyl methacrylate) (PMMA), Polytetrafluoroethylene (PTFE), and Polycarbonate (PC). The thermosets foils may be selected from one of the group consisting of Polyimide (PI), Polyurethanes (PU), rubber and silicones.

According to a further exemplary embodiment, the unsaturated fiber core layer (i.e. the fibers) may be made of one of the group consisting of Polyamide (PA), polyesters (PET, PEN, etc.), polysulfone (PSU, PPSU, PESU, etc.), polyacrylic, PI (PMI, sulfimide), polyolefin (PE, PP, etc.), thermoplastic polyurethane, TPE.

According to a further exemplary embodiment, the mechanical part is configured to be used as a stiffener membrane for acoustic applications, for example earphones. The mechanical part may be used in a micro loudspeaker. The mechanical part may be a membrane or diaphragm, which may be excited by a coil or another vibrating element. Hence, thin micro loudspeakers, specifically for portable devices, such as mobile phones, may be formed by the mechanical part.

According to a further exemplary embodiment of the method, the first skin layer, the second skin layer, and the unsaturated fiber core layer are arranged as a stack in a mold while providing heat and pressure to the stack such that at least some of the fibers are at least partially directly bonded at bonding sections to at least one of the first skin layer and the second skin layer. Furthermore, by applying heat and pressure to the stack, also a bonding connection between adjacent fibers and respective contact sections of the fibers can be formed. The pressure may be applied by applying air pressure and/or by generating a vacuum, i.e. underpressure to press the fibers together.

According to a further exemplary embodiment of the method, the first skin layer, the second skin layer, and the unsaturated fiber core layer are arranged as a stack under application of heat and pressure in a continuous roll-to-roll lamination process, a continuous belt process or a discontinuous thermo-mechanical press lamination process.

Summarizing, by the sandwich material part according to the present invention, the sandwich material part may be used as a membrane which provides a certain degree of stiffness to be able to move air molecules and to generate pressure waves which are transmitted through the medium. To generate pressure waves, the membrane needs to move and since it possesses certain mass it has some resistance to the driving force which tries to move the membrane. The driving force may be achieved using an electrical coil and a permanent magnet within the coil. A permanent magnet may be also rigidly attached to the sandwich material part functioning as a membrane. By changing the current through the coil the electrical field within the coil is changed and consequently permanent magnet is moved, together with the membrane which is now driven by the electrical current moving through the windings of the coil. The higher the driving frequency is more and more the mass hinders the alternating movement of the membrane, eventually making the system unable to keep up with the alternations of the current.

Efficiency of the energy transfer from the electrical current to the kinetical energy of the air molecules largely depends on the mass of the membrane. The bigger the mass of the speaker membrane the bigger is the opposing force to the movement and less efficient the energy transfer is. Meaning the lower the mass of the membrane the whole speaker functions more efficiently, consequently the whole uses less power and has better sound quality.

By the unsaturated fiber core layer made of fibers, the surface mass of the sandwich mechanical part membrane (e.g. measured in [g/m2]) is reduced and achieves at the same time the required stiffness of the speaker membrane, for example.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a cross sectional view of a sandwich mechanical part according to an exemplary embodiment of the present invention.
Fig. 2 shows a cross sectional view of a sandwich mechanical part having one fibre layer according to an exemplary embodiment of the present invention.
Fig. 3 shows a schematic view of a unsaturated fiber core layer made of fibers according to an exemplary embodiment of the present invention.
Fig. 4 shows a schematic view of a sandwich mechanical part showing bonding sections and contact sections of the fibers of the unsaturated fiber core layer according to an exemplary embodiment of the present invention.

### Detailed Description of Exemplary Embodiments

The illustrations in the drawings are schematic. It is noted that in different figures similar or identical elements are provided with the same reference signs.

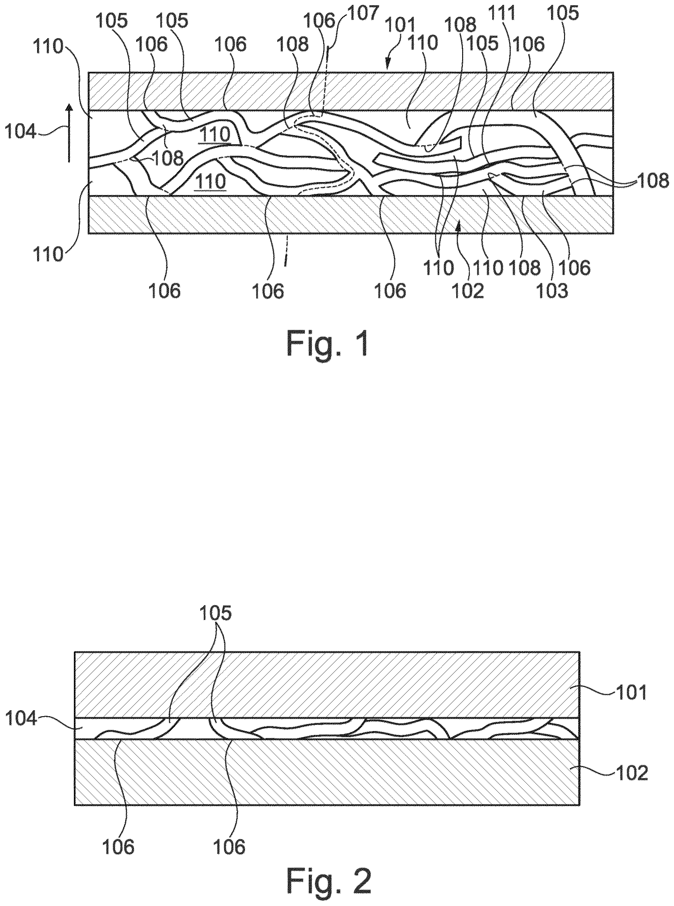

**Fig. 1** shows a sandwich mechanical part according to an exemplary embodiment of the present invention. The sandwich mechanical part comprises a first skin layer 101, a second skin layer 102, and an unsaturated fiber core layer 103 interposed between the first skin layer 101 and the second skin layer 102 to form a stack such that the first skin layer 101, the unsaturated fiber core layer 103 and the second skin layer 102 are stacked above each other along a stacking direction 104. The unsaturated fiber core layer 103 comprises fibers 105, wherein the fibers 105 at least partially contact each other in a direct contact section 108 for transferring shear forces between the first skin layer 101 and the second skin layer 102.

For example, the unsaturated fiber core layer 103 may comprise a non woven material made of fibers 105, wherein at least some of the fibers 105 are at least partially directly bonded at bonding sections 106 to at least one of the first skin layer 101 and the second skin layer 102 such that a force 107 along the stacking direction 104 between the first skin layer 101, the second skin layer 102 and the unsaturated fiber core layer 103 is transferable via the bonding sections 106.

The skin layers 101, 102 denote a layer or sheet covering the unsaturated fiber core layer 103 to increase the bending stiffness properties, but not necessarily forming a surface layer. The unsaturated fiber core layer 103 is an embedded layer having a central position within the layer sequence. The unsaturated fiber core layer 103 may be selected with a lower average density than the surrounding skin layers 101, 102. Thus, the unsaturated fiber core layer 103 will not be a surface layer (with exception of the lateral edge of the layer stack at which the unsaturated fiber core layer 103 may extend up to a surface) but will be always covered on both of its main surfaces by a skin layer 101, 102. Some fibers 105 of the unsaturated fiber core layer 103 are at least partially in direct contact with the skin layers 101, 102 without any additional layer in between.

The unsaturated fiber core layer 103 defines a layer of fibers 105 being for example a fleece or fibrous web material. The fibers 105 in the unsaturated fiber core layer 103 transfer along the stacking direction 104 a force, i.e. the force 107, via bonding sections 106 formed between a fibre section and one of the skin layers 101, 102, Furthermore, shear forces acting specifically orthogonal to the stacking direction 104 may be transferred by frictional forces between contact sections 108 of adjacent fibers 105, i.e. by entangling fibers 105 together.

Specifically, the fibers 105 of the unsaturated fiber core layer 103 are partially bonded to the respective first or second skin layer 101, 102 directly, which means that no adhesive layer or adhesive promoting material is between the respective fibers 105 and the first or second skin layer 101, 102. Specifically, the bonding section 106 is formed by thermal treatment, wherein the fiber 105 and the skin layers 101, 102 at least partially melt such that an adhesive bonding connection can be generated.

Hence, the mechanical part comprises a thin unsaturated fiber core layer 103 which is directly bonded and fixed to the skin layers 101, 102 by bonding sections 106 of the fibers 105.

At least a part of adjacent fibers 105 in the unsaturated fiber core layer 103 form a direct contact section 108 between each other at which the respective fibers 105 are directly bonded together. A first fiber 105 and a second fiber 105 may also have a respective contact section 108, at which a direct bonding between the first fiber 105 and the second fiber 105 is generated such that the force 107 is transferable. Accordingly, a plurality of fibers 105 may have respective contact sections 108, at which the bonding of the fibers 105 is generated such that the force 107 may be transferred via a plurality of fibers 105 bonded with respect to each other at respective contact sections 108. As shown by the dotted line in Fig. 1, the force 107 is transferred via a force path running from the first skin layer 101 via the fibers 105 and the respective bonding sections 106 and contact sections 108 to the second skin layer 102 and vice versa. The fibers 105 define fibers 105 that are arranged with respect to each other without being embedded in a matrix.

The bonding of the fibers 105 at the contact sections 108 may also be formed by a thermal treatment, wherein the fibers 105 are at least partially melted at the contact sections 108 and form the direct bonding connection (e.g. a melting joint), however without any additional adhesive promoting material.

As shown in Fig. 1, the fibers 105 form a matrix configuration of the fibers 105, wherein in the spaces 110 between the fibers 105 gas, in particular air, is provided. The fibers 105 contact each other at a plurality of frictional contact sections 111 and may form a frictional connection and/or a bonding connection at contact sections 108 for forming a fleece or fibrous web material. Between the fibers 105 spaces filled with gas are formed.

The spaces 110 between the fibers 105 are free of additional adhesive promoting material between each other and hence the unsaturated fiber core layer 103 is free of, in particular a liquid or solid, matrix material. Hence, the transferring of the shear forces and/or the force 107 is exclusively provided by the fibers 105 and the respective friction contact sections 111 and bonding sections 108 instead of rigid matrix material, such as resin.

Adjacent fibers 105, e.g. of the unsaturated fiber core layer 103 , are at least partially in frictional or bonded contact at contact sections 111 with respect to each other for transferring a shear force being orientated orthogonal to the stacking direction 107 between each other. As described above, the fibers 105 may form a plurality of frictional contact sections 111 forming a frictional contact between the adjacent unsaturated fibers 105.

The fibers 105 of the unsaturated fiber core layer 103 is made of thermoplastic fibers, in particular polyethylene terephthalates fibers and/or polysulfone fibers. Thermoplastic fibers becomes underinflated of heat pliable or moldable at a certain elevated temperature and solidifies upon cooling. Specifically, by applying heat, a bond connection between the skin layer 101, 102 or between adjacent fibers 105 at contact sections 108 may be formed and upon cooling, the rigid connection may be formed for transferring the force 107. The fibers 105 may also have a core, i.e. a thermoset core, which is coated or covered with a thermoplastic material.

The unsaturated fiber core layer 103 has the same or a lower density than each of the first skin layer 101 and the second skin layer 102. Hence, generally the unsaturated fiber core layer 103 may be thicker than the skin layers 101, 102.

The sandwich mechanical part may configured to be used as a stiffener membrane for acoustic applications, in particular for earphones. The mechanical part may also be used in a micro loudspeaker. The mechanical part may be a membrane or diaphragm, which may be excited by a coil or another vibrating element. Hence, thin micro loudspeakers, specifically for portable devices, such as mobile phones, may be formed by the mechanical part.

**Fig. 2** shows a cross sectional view of a sandwich mechanical part having one fibre layer according to an exemplary embodiment of the present invention. All or at least 80% or more of the fibers 105 are arranged in the shown embodiment within one common layer. Along the stacking direction 104, only one layer of fibers 105 exists. In other words, all or at least 80% of the fibers 105 are not arranged above each other and are arrange adjacent to each other, i.e. orthogonal to the stacking direction 104. In a further exemplary embodiment, all or at least 80% or more of the fibers 105 are oriented in the common layer with respect to each other in a common direction.

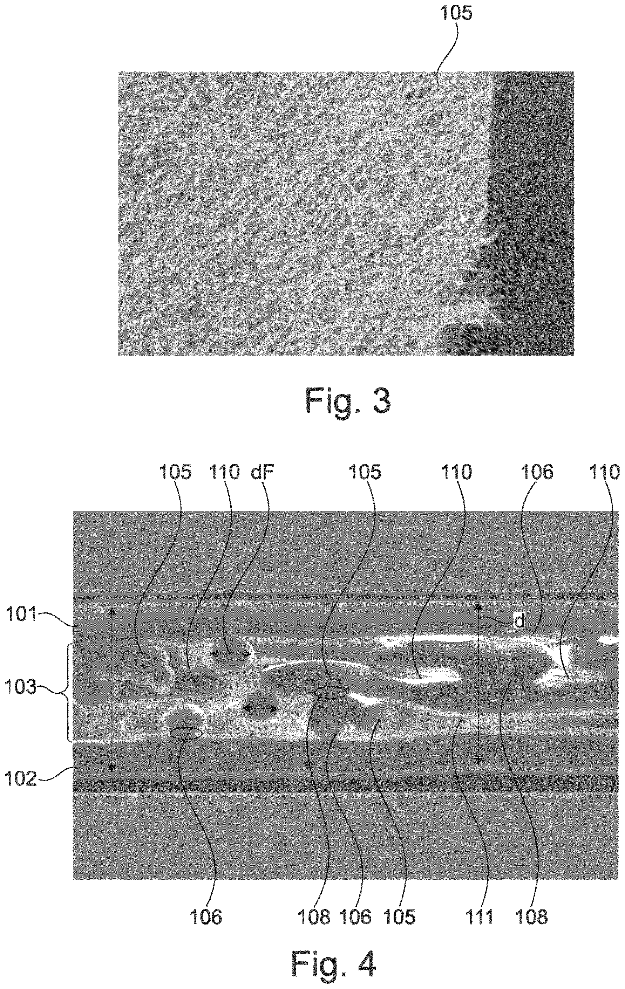

**Fig. 3** shows a schematic view of an unsaturated fiber core layer 103 having fibers according to an exemplary embodiment of the present invention. The unsaturated fiber core layer 103 may have a non woven fabric which is a fabric-like material made from staple fibre (short) and/or long fibers (continuous long). The fibers 105 may be partially bonded together at bonding contact sections 108 by mechanical, heat or solvent treatment but without additional adhesive material. The non woven material made of fibers 105 denote fabrics, which are neither woven nor knitted. The non woven fabric of the unsaturated fiber core layer 103 may be made from randomly oriented fibers 105 pressed into a thin layer form. Within the thin layer, the fibers 105 are connected in a way that they are rigidly connected by adhesion between surfaces of the fibers 105 on the bonding contact sections 108 between each other.

The fibers 105 of the unsaturated fiber core layer 103 shown in Fig. 3 are arranged randomly orientated with respect to each other. Specifically, the fibers 105 of the unsaturated fiber core layer 103 are randomly orientated with respect to a fibre direction parallel to the stacking direction 104 and orthogonal to the stacking direction 104. Specifically, the respective fibers 105 may comprise a randomly orientated extension along its length such that a part of the fiber 105 may be orientated more along the stacking direction 104 and another part of the fiber 105 may be orientated more orthogonal to the stacking direction 104. Hence, a kind of fibrous web material is formed being for example able to transfer shear forces by a plurality of frictional contacts 111 between adjacent fibers 105.

**Fig. 4** shows a schematic view of a sandwich mechanical part showing bonding sections 106 and bonding contact sections 108 of the fibers 105 of the unsaturated fiber core layer 103. Along a length of a respective fiber 105 one or a plurality of spaced apart bonding sections 106 may be generated between the respective first or second skin layer 101, 102. This means, that not the complete length of a fiber 105 must provide a bonding with a respective skin layer 101, 102, so that a bonding may be provided only section wise along the length of a fibre 105.

Some fibers 105 may contact the first skin layer 101 with the first bonding section 106 and some fibers 105 may contact the second skin layer 102 with the second bonding section 106. Hence, a force 107 (shown in Fig. 1) acting with a direction component along the stacking direction 104 may be transferred from the first skin layer 101 to the second skin layer 102 by the respective fibers 105.

Additionally, a first fiber 105 may form the first bonding section 106 with the first skin layer 101 and a second fiber 105 may form the second bonding section 106with the second skin layer. The fist fiber 105 and the second fiber 105 may contact each other and form a contact section 108 at which the force 107 may be transferred. At the contact section 108, the force 107 may be transferred by a direct bonding connection (e.g. a melting joint).

Furthermore, shear forces or also a force may be transferred by a frictional contact section 111 between the fibers 105.

Between the fibers 105 a liquid or solid material free spaces 110 are formed, wherein in the spaces 110 between the fibers 105 gas, in particular air, is provided. The fibers 105 contact each other at a plurality of frictional contact sections 111 and may form a frictional connection and/or a bonding connection at contact sections 108 for forming a fleece or fibrous web material. Between the fibers 105 spaces filled with gas are formed. The spaces 110 between the fibers 105 are free of additional adhesive promoting material, in particular a liquid or solid matrix material.

The thickness of the unsaturated fiber core layer 103 may be below 10 times the average diameter dF of the fibers 105 of the unsaturated fiber core layer 103. Specifically, the unsaturated fiber core layer 103 comprises maximal 10 layers of fibers 105 above each other. The thickness of the unsaturated fiber core layer 103 may be below 300 µm, below 200 µm, 90 µm, below 70 µm, below 40 µm or below 20 µm. Hence, the overall thickness d of the mechanical part may be reduced, so that tiny and small parts, for example for acoustic micro-speakers, can be formed.

The first skin layer 101 and/or the second skin layer 102 have a thickness below 50 µm, in particular below 20 µm, below 14 µm, below 8 µm or below 5 µm. For example, by having a thickness for the skin layers 101, 102 below 6 µm and by having a thickness of the unsaturated fiber core layer 103 below 30 µm, mechanical parts having a thickness d of less than 42 µm provided.

It should be noted that the term "comprising" does not exclude other elements or steps and "a" or "an" does not exclude a plurality. Also, elements described in association with different embodiments may be combined. It should also be noted that reference signs in the claims should not be construed as limiting the scope of the claims.

### List of reference signs:

101 first skin layer
102 second skin layer
103 unsaturated fiber core layer
104 stacking direction
105 fibers
106 bonding section
107 force
108 contact section
110 space
111 friction contact section
d thickness of part
dF diameter fiber

## Claims

1. Sandwich mechanical part, comprising:
a first skin layer (101),
a second skin layer (102), and
an unsaturated fiber core layer (103) interposed between the first skin layer (101) and the second skin layer (102) to form a stack such that the first skin layer (101), the unsaturated fiber core layer (103) and the second skin layer (102) are stacked above each other along a stacking direction (104), wherein the unsaturated fiber core layer (103) comprises unsaturated fibers (105),
wherein the fibers (105) within the unsaturated fiber core layer (103) are at least partially in contact with each other in a direct contact section (108) for transferring shear forces between the first skin layer (101) and the second skin layer (102).

2. Sandwich mechanical part according to claim 1,
wherein at least some of the fibers (105) in the unsaturated fiber core layer (103) are at least partially directly bonded at bonding sections (106) to at least one of the first skin layer (101) and the second skin layer (102) such that a force (107) between the first skin layer (101), the second skin layer (102) and the unsaturated fiber core layer (103) is transferable via the bonding sections (106).

3. Sandwich mechanical part according to claim 1 or 2,
wherein the at least a part of adjacent fibers (105) in the unsaturated fiber core layer (103) form the direct contact section (108) between each other in such a manner, that shear forces generated by bending of the sandwich mechanical part in at least one of the first skin layer (101) and the second skin layer (102) are transferable for increasing the bending stiffness of the sandwich mechanical part.

4. Sandwich mechanical part according to one of the claims 1 to 3,
wherein the fibers in the unsaturated fiber core layer (103) are arranged in such a way that spaces (110) filled with gas, in particular air, between the fibers (105) are provided,
wherein the spaces (110) between the fibers (105) are in particular free of additional adhesive promoting material, in particular a liquid or solid matrix material.

5. Sandwich mechanical part according to one of the claims 1 to 4, wherein at least some of the fibers (105) in the unsaturated fiber core layer (103) form a non woven material.

6. Sandwich mechanical part according to one of the claims 1 to 5,
wherein the fibers (105) are arranged within one common layer,
wherein in particular at least some fibers (105) in the common layer are oriented with respect to each other in a common direction.

7. Sandwich mechanical part according to one of the claims 1 to 6, wherein at least some fibers (105) arranged randomly orientated with respect to each other.

8. Sandwich mechanical part according to one of the claims 1 to 7, wherein adjacent fibers (105) are at least partially bonded (111) with respect to each other for transferring a shear force being orientated orthogonal to the stacking direction (104) between each other.

9. Sandwich mechanical part according to one of the claims 1 to 8, wherein the fibers (105) are made of polymer fibers, in particular thermoplastic fibers such as polyethylene terephthalates fibers, polysulfone fibers, Polyethylene naphthalate (PEN) fibers, Polyethylene (PE) fibers and/or Polyamide (PA) fibers and/or
wherein the thickness of the unsaturated fiber core layer (103) is below 10 times the average diameter of the fibers (105) in the unsaturated fiber layers.

10. Sandwich mechanical part according to one of the claims 1 to 9,
wherein the thickness of the unsaturated fiber core layer of (103) is below 300 µm, below 200 µm, 90 µm, below 70 µm, below 40 µm or below 20 µm, and/or
wherein the first skin layer (101) and/or the second skin layer (102) have a thickness below 100 µm, in particular below 50 µm, below 20 µm, below 15 µm, below 8 µm or below 5 µm.

11. Sandwich mechanical part according to one of the claims 1 to 10,
wherein the unsaturated fiber core layer (103) has the same or a lower average density than each of the first skin layer (101) and/or the second skin layer (102), and/or
wherein the unsaturated fiber core layer (103) has an average density between 30 and 800 kg/m3, in particular between 60 and 400 kg/m3 or 60 to 600 kg/m3.

12. Sandwich mechanical part according to one of the claims 1 to 11, comprising at least one of the following features:
wherein at least one of the skin layers (101, 102) are made of metals, in particular of steel alloys, aluminum alloys, magnesium alloys, copper, nickel alloys, titanium alloys and/or beryllium,
wherein at least one of the skin layers (101, 102) are made of carbon based materials, in particular of one of the group consisting of carbon fiber reinforced polymer, graphene and graphite paper,
wherein at least one of the skin layers (101, 102) are coated with diamond like carbon coating,
wherein at least one of the skin layers (101, 102) are made of non-carbon based fiber reinforced materials, in particular of one of the group consisting of glass fiber reinforced polymer, Aramid reinforced plastics, Zylon reinforced plastics, PE fiber reinforced plastics and natural fiber reinforced plastics,
wherein at least one of the skin layers (101, 102) are made of thermoplastic foils and/or thermosets foils,
wherein the thermoplastic foils are selected from one of the group consisting of PET, PEN, PEEK, PEI, PES, PESU, TPU, TPE, LCPs, Aramid, PP, PE, PMMA, PTFE and PC,
wherein the thermosets foils are selected from one of the group consisting of PI, Polyurethanes, rubber and silicones.

13. Sandwich mechanical part according to one of the claims 1 to 12, configured to be used as a stiffener membrane for acoustic applications, in particular earphones and microphones.

14. Method of manufacturing a sandwich mechanical part, the method comprising:
providing a first skin layer (101),
providing a second skin layer (102),
a second skin layer (102), and providing a unsaturated fiber core layer (103) interposed between the first skin layer (101) and the second skin layer (102) to form a stack such that the first skin layer (101), the unsaturated fiber core layer (103) and the second skin layer (102) are stacked above each other along a stacking direction (104),
wherein the unsaturated fiber core layer (103) comprises fibers (105),
wherein the fibers (105) within the unsaturated fiber core layer (103) are at least partially in contact with each other in a direct contact section (108) for transferring shear forces between the first skin layer (101) and the second skin layer (102).

15. Method according to claim 14,
wherein the first skin layer (101), the second skin layer (102), and the unsaturated fiber core layer (103) are arranged as a stack in a mold while providing heat and pressure to the stack such that at least some of the fibers (105) are at least partially directly bonded at bonding sections (106) to at least one of the first skin layer (101) and the second skin layer (102), or wherein the first skin layer (101), the second skin layer (102), and the unsaturated fiber core layer (103) are arranged as a stack under application of heat and pressure in a continuous roll-to-roll lamination process, a continuous belt process or a discontinuous thermo-mechanical press lamination process.
